# EUROPEAN PATENT SPECIFICATION

(11) **EP 3 172 618 B1**
(45) Date of publication and mention of the grant of the patent: **30.12.2020**
(21) Application number: 15825217.1
(22) Date of filing: 24.07.2015
(51) Int. Cl.: G02F 1/19

(54) **DISPLAY APPARATUS AND METHOD FOR CONTROLLING DISPLAY APPARATUS THEREOF**
ANZEIGEVORRICHTUNG UND VERFAHREN ZUR STEUERUNG DER ANZEIGEVORRICHTUNG
APPAREIL D'AFFICHAGE ET SON PROCÉDÉ DE COMMANDE

(30) Priority: 25.07.2014 KR 20140094628
(43) Date of publication of application: 31.05.2017
(73) Proprietor: Samsung Electronics Co., Ltd., Gyeonggi-do 16677 (KR)
(72) Inventor: CHO, Yun-seong, Suwon-si Gyeonggi-do 443-751 (KR); LEE, Sung-ho, Hwaseong-si Gyeonggi-do 445-736 (KR); SONG, Woong-jae, Seongnam-si Gyeonggi-do 463-906 (KR)
(74) Representative: Taor, Simon Edward William
(86) International application number: PCT/KR2015/007746
(87) International publication number: WO 2016/013908

(56) References cited:
- KR-A- 20120 052 019
- KR-A- 20120 052 019
- KR-A- 20120 112 889
- KR-A- 20120 112 889
- KR-U- 20130 001 694
- KR-U- 20130 001 694
- US-A1- 2010 253 675
- US-A1- 2011 001 697
- US-A1- 2011 001 697
- US-A1- 2012 044 278
- US-A1- 2012 044 278
- US-A1- 2014 184 577

## Description

### Technical Field

Methods and apparatuses consistent with exemplary embodiments relate to a display apparatus capable of reflecting light, received from outside the display apparatus, using a reflector positioned on a display panel, and a method for controlling the display apparatus.

### Background Art

Currently, any number of various types of multimedia contents and information can be received by and displayed on a display apparatus, regardless of the time and location of the display apparatus.

In the case of a conventional display apparatus, a viewer may not be able to properly watch an image content output by the display apparatus due to external light. Particularly in the case of a display apparatus located outside, viewing may be especially difficult due to bright sunlight.

Accordingly, a method for displaying image content on a display apparatus, so that the content can be easily viewed regardless of external light, is desired
US2010/0253675 A1 discloses a prior art LCD device and its control method.

### Disclosure of Invention

### Technical Problem

One or more exemplary embodiments may address the aforementioned problems by providing a display apparatus that is capable of preventing a blackening phenomenon by reflecting light based on a determined illumination value of external light, and a method for controlling the display apparatus.

### Solution to Problem

According to an aspect of the invention, there is provided a display apparatus as set out in claim 1.

According to another aspect of the invention, there is provided a method of controlling a display apparatus as set out in claim 10.

Optional features are set out in the dependent claims.

### Advantageous Effects of Invention

One or more of the exemplary embodiments described above may enable a user to easily view image content, output from a display apparatus, regardless of external light.

### Brief Description of Drawings

FIG 1. is a block diagram illustrating a configuration of a display apparatus according to an exemplary embodiment;
FIG. 2 is a block diagram illustrating additional details of a display apparatus according to an exemplary embodiment;
FIGS. 3A to 3B illustrate a display panel unit, a reflector, and a heat radiator according to an exemplary embodiment;
FIG. 4 illustrates a display apparatus equipped with a plurality of illumination sensors according to an exemplary embodiment;
FIG. 5 is a graph illustrating an illumination value measured by a plurality of illumination sensors according to an exemplary embodiment;
FIG. 6 is a graph illustrating a relationship between a temperature and a discoloration of a reflector according to an exemplary embodiment;
FIG. 7 illustrates the generation of heat in only a portion of a display area according to an installation height of a display apparatus according to an exemplary embodiment;
FIGS. 8A to 8B illustrate the generation of heat in only a portion of a display area according to an installation height of a display apparatus and a distance between a display apparatus and a viewer, according to an exemplary embodiment;
FIG. 9 is a flowchart of a method for controlling a display apparatus according to an light is incident on the display apparatus from outside the display apparatus.

The generating heat may comprise generate heat in order to change a color of the temperature indicating paint of the reflector so that the reflector reflects light incident thereon from the outside when an illumination value sensed by the illumination sensing unit is equal to or higher than a predetermined value.

The sensing may comprising sensing an illumination value in each of a plurality of areas of the display panel unit using a plurality of illumination sensors.

The generating heat may comprise generating heat in only one area in which an illumination value is equal to or higher than a predetermined value, among a plurality of areas of the display apparatus.

The method may further include determining an installation height of the display apparatus, and the generating heat may comprise generating heat in only one of a plurality of areas of the display apparatus according to the determined installation height.

### Advantageous Effects of Invention

One or more of the exemplary embodiments described above may enable a user to easily view image content, output from a display apparatus, regardless of external light.

### Brief Description of Drawings

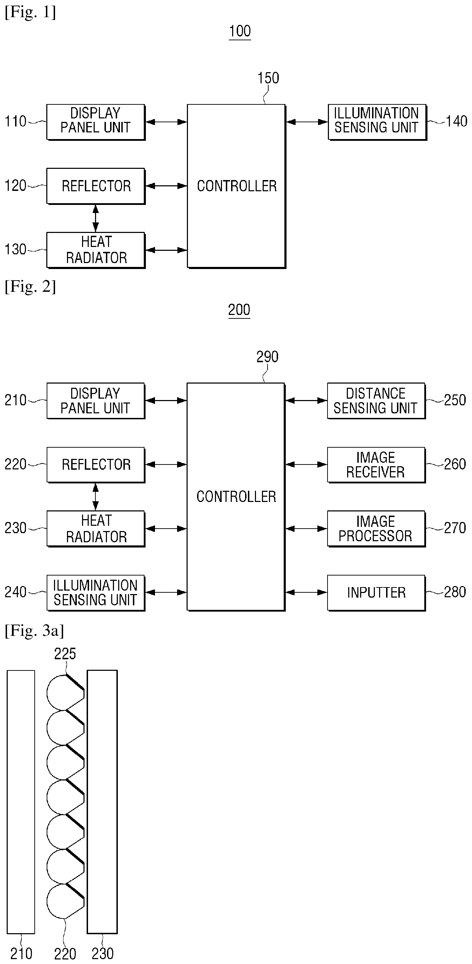

FIG 1. is a block diagram illustrating a configuration of a display apparatus according to an exemplary embodiment;
FIG. 2 is a block diagram illustrating additional details of a display apparatus according to an exemplary embodiment;
FIGS. 3A to 3B illustrate a display panel unit, a reflector, and a heat radiator according to an exemplary embodiment;

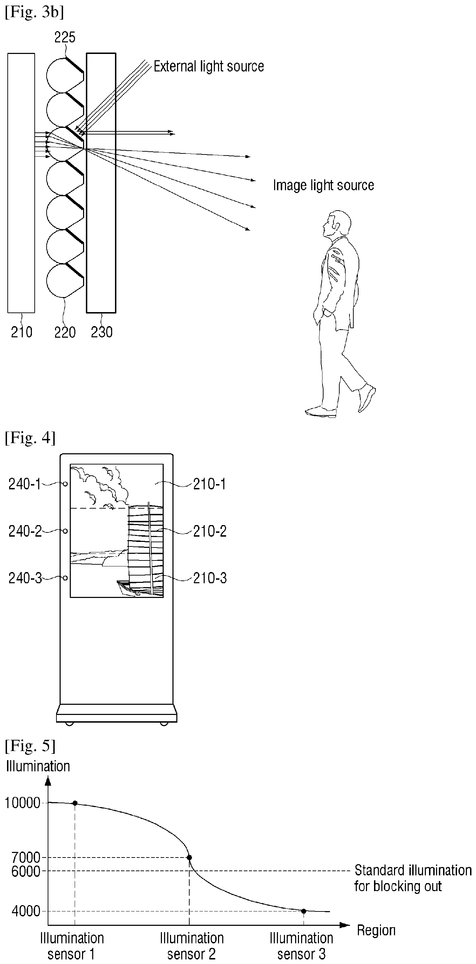

FIG. 4 illustrates a display apparatus equipped with a plurality of illumination sensors according to an exemplary embodiment;
FIG. 5 is a graph illustrating an illumination value measured by a plurality of illumination sensors according to an exemplary embodiment;

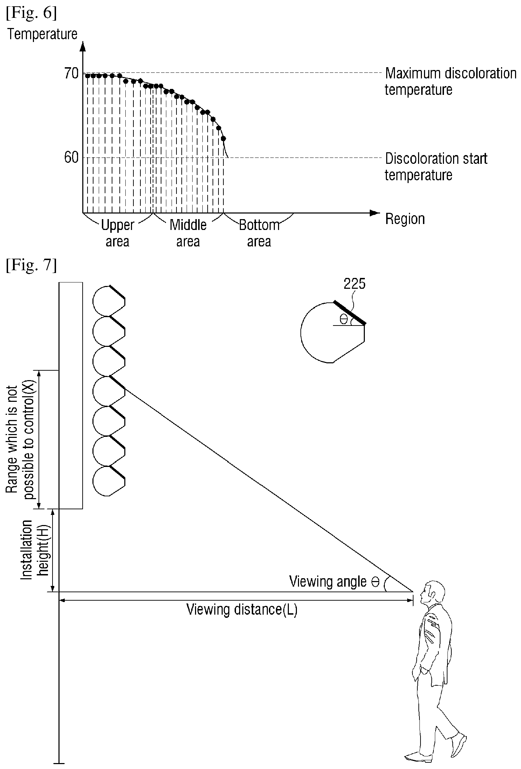

FIG. 6 is a graph illustrating a relationship between a temperature and a discoloration of a reflector according to an exemplary embodiment;
FIG. 7 illustrates the generation of heat in only a portion of a display area according to an installation height of a display apparatus according to an exemplary embodiment;

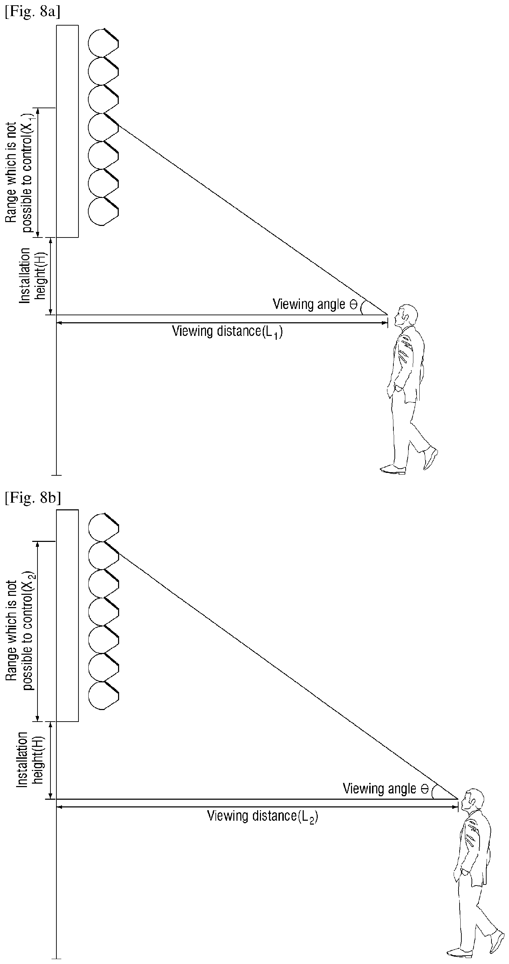

FIGS. 8A to 8B illustrate the generation of heat in only a portion of a display area according to an installation height of a display apparatus and a distance between a display apparatus and a viewer, according to an exemplary embodiment;

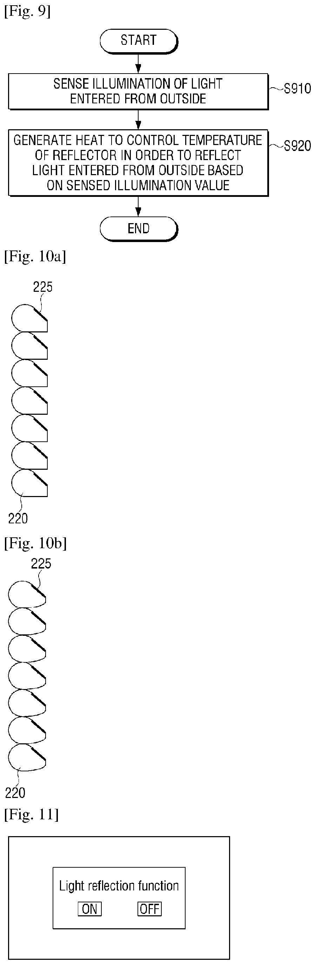

FIG. 9 is a flowchart of a method for controlling a display apparatus according to an exemplary embodiment;
FIGS. 10A to 10B illustrate various exemplary shapes of a reflector; and
FIG. 11 illustrates a user interface (UI) for controlling a light reflection function, according to an exemplary embodiment.

### Best Mode for Carrying out the Invention

-

### Mode for the Invention

In the following description, the same drawing reference numerals are used for the same elements among different drawings. the specifics described below, such as detailed construction and elements, are provided to assist in a comprehensive understanding of exemplary embodiments. The exemplary embodiments can be carried out without these specifically defined matters, as would be understood by one of skill in the art. Also, well-known functions or constructions are not described in detail as such descriptions might would obscure the exemplary embodiments with unnecessary detail.

Although the terms first, second, etc. may be used herein to describe various elements, these elements should not be interpreted as being limited by these terms. These terms are only used to distinguish one element from another element.

The terminology used herein is for the purpose of describing particular embodiments only and is not intended to be limiting of exemplary embodiments. As used herein, the singular forms "a," "an" and "the" are intended to include the plural forms as well, unless context clearly indicates otherwise. It should be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups.

In exemplary embodiments described below, a "module" or a "unit" may perform at least one function or operation and may be embodied by hardware or software or by a combination of hardware and software. Also, a plurality of "modules" or a plurality of "units" may be integrated into at least one module or units, and a "module" or a "unit" embodied as particular hardware may be embodied by at least one processor.

Hereinafter, exemplary embodiments will be described in greater detail with reference to the accompanying drawings. FIG. 1 is a block diagram illustrating a configuration of a display apparatus 100 according to an exemplary embodiment. As illustrated in FIG. 1, the display apparatus 100 includes a display panel unit 110, a reflector 120, a heat radiator 130, an illumination sensing unit 140, and a controller 150. For example, the display apparatus 100 may be a kiosk installed outside a building, or may be embodied by any of various display apparatuses such as a digital television (TV), a desktop personal computer (PC), a notebook PC, a navigation unit, a smart TV, a digital information display (DID), or the like.

The controller 150 controls the display panel unit 110 to display image data.

The reflector 120 is disposed on the display panel unit 110, and a color of the reflector 120 changes according to temperature. The reflector 120 reflects light incident thereon from outside of the display apparatus 100. In particular, the reflector 120 may reflect incident light using a temperature indicating paint that has a color that changes according to temperature.

The heat radiator 130 is disposed on the reflector 120 and is controlled by the controller 150 to generate heat and thereby control the temperature of the reflector 120. In this way, the heat radiator 130 generates heat that heats the reflector 120, causing the reflector to change color.

The illumination sensing unit 140 senses light incident from outside the display apparatus 100. In particular, the illumination sensing unit 140 may be equipped with a plurality of illumination sensors corresponding to a plurality of areas of the display panel unit 110.

The controller 150 controls the overall operation of the display apparatus 100. In particular, the controller 150 may control the heat radiator 130 to generate heat to control the temperature of the reflector 120, based on to an illumination value sensed by the illumination sensing unit 140. Specifically, if an illumination value sensed through the illumination sensing unit 140 is equal to or higher than a predetermined value, the controller 150 may control the heat generator 130 to generate heat to cause the color of the temperature indicating paint of the reflector 120 to change color, thereby controlling the reflector 120 to reflect light incident from outside the display apparatus 100.

If the illumination sensing unit 140 includes a plurality of illumination sensors, the controller 150 may sense illumination values of a plurality of areas of the display panel unit 110 using the plurality of illumination sensors. The controller 150 may then control a portion of the heat radiator 130, positioned in the area where an illumination value is equal to or higher than a predetermined value, to generate heat, thereby heating a portion of the reflector 120, positioned in the area of the display panel unit 110 where the illumination value is equal to or higher than the predetermined value, reflects light incident thereon from outside the display apparatus 100.

The controller 150 may determine an installation height of the display device 110 and generate heat in only a portion of the display panel unit 110 according to the determined installation height. More specifically, assuming that the display panel 110 is mounted vertically, if a viewer is viewing an image, displayed on an area of the display panel 110 where temperature indicating paint is applied, from an angle greater than an angle (θ), below the horizon, the discoloration of the temperature indicating paint may block the image from the viewer. In this situation, the controller 150 may control the heat radiator 130 to heat the reflector such that the reflector only reflects light from areas of the display panel 110 that are higher than a predetermined height.

The controller 150 may control the heat radiator 120 to generate heat in only a partial region of the display panel unit 110 based on a distance between the display apparatus 100 and a viewer and on an installation height of the display apparatus 100.

According to the various exemplary embodiments described above, a viewer outside a building may more easily view an image displayed on the display apparatus 100 regardless of ambient light.

Hereinafter, an exemplary embodiment will be described in greater detail with reference to FIGS. 2 through 8B. FIG. 2 is a block diagram illustrating additional details of a display apparatus 200 according to an exemplary embodiment. As illustrated in FIG. 2, the display apparatus 200 includes a display panel unit 210, a reflector 220, a heat radiator 230, an illumination sensing unit 240, a distance sensing unit 250, an image receiver 260, an image processor 270, an inputter 280, and a controller 290.

FIG. 2 illustrates various elements of an exemplary display apparatus 200 equipped with various functions such as a display function, a heat radiate function and the like. According to an exemplary embodiment, one or more of the elements illustrated in FIG. 2 may be deleted or changed, and another element may be added, as would be understood by one of skill in the art based on the descriptions provided herein.

The display panel unit 210 outputs image based on image data received by the image receiver 260. Herein, the display panel unit 210 may be a liquid crystal display (LCD); however, this is only one exemplary embodiment, and the display panel unit 210 may be any of various displays such as a cathode ray tube (CRT), a plasma display panel (PDP), an organic light emitting diodes (OLED), and the like.

The reflector 220 is disposed on the display panel unit 210 and a color of the reflector 220 changes according to temperate. The reflector 220 reflects light incident thereon from outside of the display apparatus 200. The reflector 220 may reflect light incident from the outside of the display apparatus 200 using a temperature indicating paint that has a color that changes according to temperature. Temperature indicating paint is one type of temperature discoloration paint, and is a special paint which changes from colorlessness to colored or from colored to another color when its temperature exceeds a predetermined temperature. The range of the color change temperature is different based on the conditions of production of the paint, but typically, the range of the color change temperature may be from about -15°C to about 70°C, and the concentration of the color in the paint may vary according to the specific pigment mixture used. For example, the temperature indicating paint may be initially transparent, and may change to white at a temperature of 60°C. The reflector 220 may have a predetermined pattern, and the temperature indicating paint may be applied to the reflector, according to the pattern, to face a direction from which light is incident.

The heat radiator 230 is positioned on the reflector 220, and generates heat to change the temperature of the reflector 220. Specifically, the heat radiator 230 may generate heat to heat at least one area of the reflector 220. Herein, the heat radiator 230 may include an indium tin oxide (ITO) or graphene in order to prevent the heat radiator from blocking a view of an image output by the display panel unit 210.

FIGS. 3A and 3B illustrate the display panel unit 210, the reflector 220 and the heat radiator 230 according to an exemplary embodiment.

As illustrated in FIG. 3A, the reflector 220, patterned in a specific shape, is positioned on the display panel unit 210, and the heat radiator 230, operable to change a temperature of the reflector 220, is positioned on the reflector 220. In this example, the reflector 220 has the shape of a plurality of semicircles on a side facing the display panel unit 210, and has the shape of a plurality of trapezoids (or truncated pyramids) on a side facing the heat radiator 230. The temperature indicating paint 225 may be applied to a long side of each of the trapezoidal shapes, the long side on which the temperature indicating paint 225 is disposed facing a direction from which external light will most likely be incident on the reflector 220. Accordingly, the temperature indicating paint 225 may reflect light incident from an upper side, as shown in FIG. 3B. In other words, when a viewing angle is from below the display apparatus 200, a long, lower side of each of the trapezoidal shapes may be transparent so that the view of a viewer is not blocked.

FIG. 3B illustrates a light path of an image light source and an external light source output through the display panel unit 210. In the case of the image light source, light is focused through the pattern of semicircles of the reflector 220, and then is transmitted out of the display apparatus 200, to a viewer. In the case of the external light source, light from the external light source is reflected by the temperature indicating paint, disposed on a side of each of the trapezoidal shapes of the reflector 220, and is thereby directed away from a viewer. Accordingly, the display device 200 may prevent the blackening phenomenon whereby an image is degraded due to light from an external light source.

The illumination sensing unit 240 senses an illumination value of light incident on the display apparatus 200 from an external source. The illumination sensing unit 240 may include a plurality of illumination sensors, and the plurality of illumination sensors may be positioned in a plurality of areas of the display panel unit 210.

The distance sensing unit 250 measures a distance between the display apparatus 200 and a viewer. The distance sensing unit 250 may measure a distance between the display apparatus 200 and a viewer using a camera, infrared light, or the like, as would be understood by one of skill in the art.

The image receiver 260 receives image data from any of various sources. For example, the image receiver 260 may receive broadcasting image data from an external broadcasting company, and may also receive image data from an external apparatus, such as a DVD (digital video disc) player, for example.

The image processor 270 processes the image data received from the image receiver 260. The image processor 270 may perform any one or more of various image processes such as decoding, scaling, noise filtering, frame rate conversion, resolution conversion, and on the like, as would be understood by one of skill in the art.

The inputter 280 may receive an input from a user and input the user instruction to the controller 290, to control the display apparatus 200. The inputter 280 may receive an input a user instruction including information regarding an installation height of the display apparatus 200. More particularly, the inputter 280 may be as a touch panel for receiving a touch input from a user, but this is merely exemplary, and the inputter 280 may alternately be any one or more of a remote controller, a pointing device, a motion recognition device, a mouse, and the like, as would be understood by one of skill in the art.

The controller 290 controls the overall operation of the display apparatus 200 according to user instructions received through the inputter 280, or according to information received from one or more other units of the display apparatus 200. For example, the controller 290 may control the heat radiator 230 to radiate heat to control the temperature of the reflector 220 according to an illumination value sensed by the illumination sensing unit 240.

For example, if an illumination value sensed by the illumination sensing unit 240 is equal to or higher than a predetermined value, the controller 290 may control the heat radiator 230 to generate heat in order to change the color of temperature indicating paint of the reflector 220 so that the reflector 220 reflects light incident thereon from an external source. For example, if an illumination value sensed through the illumination sensing unit 240 is equal to or higher than 50,000 lux, the controller 290 may control the heat radiator 230 to generate heat by controlling current to flow through a heater film of the heat radiator 230.

The illumination sensing unit 240 may include a plurality of illumination sensors, and a plurality of illumination sensors may be positioned in areas corresponding to the display panel unit 210. As shown in FIG. 4, a first illumination sensor 240-1 may be positioned adjacent to an upper area 210-1 of the display panel unit, a second illumination sensor 240-2 may be positioned adjacent to a middle area 210-2 of the display panel unit, and a third illumination sensor 240-3 may be positioned adjacent to a bottom area 210-3 of the display panel unit.

Each of a plurality of illumination sensors 240-1 to 240-3 is configured to sense an illumination value of light incident thereon from an external light source. The controller 290 may control the heat radiator 230 to change a temperature of regions of the reflector 220, corresponding to the plurality of areas 210-1 to 210-3 of the display panel unit, using the illumination values sensed by the plurality of sensors 240-1 to 240-3.

For example, as illustrated in FIG. 5, if an illumination value sensed by the first illumination sensor 240-1 is 10,000 lux, an illumination value sensed by the second illumination sensor 240-2 is 7,000 lux, and an illumination value sensed by the third illumination sensor 240-3 is 4,000 lux, the controller 290 may determine that the external light incident on the upper 210-1 and middle 210-2 areas is larger than a predetermined value, e.g. a standard illumination for blocking out, for example, 6,000 lux.

The controller 290 may then control the heat radiator 230 to increase the temperature of the portions of the reflector 220 disposed in areas corresponding to the upper area 210-1 and the middle area 210-2 so that the external light incident on the upper area 210-1 and the middle area 210-2 is reflected. The controller 290 may control the heat radiator 230 so that the temperature of the portions of the reflector 220 disposed in areas corresponding to the upper area 210-1 and the middle area 210-2 are equal to or higher than 60 degrees, which is a discoloration point. In particular, as illustrated in FIG. 6, the controller 290 may control the heat radiator 230 so that the temperature of the portion of the reflector 220 corresponding to the upper area 210-1, where an illumination value is large, is higher than the temperature of the portion of the reflector 220 corresponding to the middle area 210-2. However, this is merely exemplary, and the temperature of the portions of the reflector 220 in areas corresponding to both the upper area 210-1 and the middle area 210-2 may be identical.

In this way, the temperature of the temperature indicating paint disposed in portions of the reflector 220 corresponding to the upper area 210-1 and the middle area 210-2 becomes equal to or higher than a discoloration point, and thus, a user can easily view an image displayed on the upper area 210-1 and the middle area 210-2 of the display panel unit due to the reflection of the external light in the upper area 210-1 and the middle area 210-2 of the display panel unit.

The controller 290 may determine an installation height of the display apparatus 200, and control the heat radiator to generate heat in only one portion of the display panel unit 210 according to the determined installation height. Specifically, if a user is viewing an image displayed on the display apparatus 200 from a viewing angle lower than an angle (θ) of a side of the reflector 260 on which the temperature indicating paint is applied, the external light may be reflected incorrectly by the temperature indicating paint, so that the reflected external light may interfere with the user's view of the image. Accordingly, the controller 290 may control the heat radiator 230 to increase the temperature of only that portion of the reflector 220 which is higher than a specific height (an area for which the user's viewing angle (θ) is larger than the angle of the side of the reflector 260 on which the temperature indicating paint is applied), so that only external light incident on an upper part of the display panel unit 210 is reflected.

More specifically, as illustrated in FIG. 7, if an average viewing distance (L) between the display apparatus 200 and a viewer, and an installation height (H) when a display is installed (that is, a height where the display apparatus is installed from an eye level of a user) are known, the controller 290 may calculate a range (x), within which it is not possible to control the reflection of external light using Equation 1 below. In other words, the controller 290 may use Equation 1 to determine the range (x) of the display apparatus 200, for which the reflection of external light should not be controlled using the temperature indicating paint. The controller 290 can then control the temperature of the portions of the reflector 220 other than those portions within the range (x). [Equation 1] $x = \left(L*tanθ\right) - H$

As described above, by determining an area of the display apparatus 200, for which the temperature should be changed according to the installation height (H) of the display, the portions of the reflector 220 positioned in an area for which the user's viewing angle is smaller than an angle of the side of the reflector on which the temperature indicating paint is applied, are not heated, so that the disruption of the view of a user who is watching an image is minimized.

In this way, the controller 290 may control the heat radiator 230 to generate heat only in a partial area of the display panel unit 210 according to the distance between the display apparatus 200 and the viewer, as sensed by the distance sensing unit 250, and the installation height of the display apparatus 200.

More specifically, as illustrated in FIG. 8A, if a viewing distance (L1) between the display apparatus 200 and a viewer is sensed by the distance sensing unit 250 and the installation height (H) when a display is installed are known, the controller 290 may calculate a range (x1), within which it is not possible to control the reflection of external light, using Equation 2 below. The controller 290 can then control a temperature of the portions of the reflector 220 other than those portions within the range (x1). [Equation 2] ${x}_{1} = \left({L}_{1}*tanθ\right) - H$

As illustrated in FIG. 8B, if the viewing distance (L2) between the display apparatus 200 and a user is sensed by the distance sending unit 250, and the installation height (H) when a display is installed is known, the controller 290 may calculate a range (x2) within which it is not possible to control the reflection of external light, using Equation 3 below. The controller 290 can then control the temperature of those portions of the reflector 220 other than those portions within the range (x2). [Equation 3] ${x}_{2} = \left({L}_{2}*tanθ\right) - H$

As illustrated in FIGS. 8A and 8B, as a viewer comes approaches the display apparatus 200, the range (x), within which it is not possible to control the reflection of external light, is decreased. Conversely, as the viewer moves away from the display apparatus 200, the range (x), within which it is not possible to control the reflection of external light, is increased. In other words, as the user approaches the display apparatus 200, external light may be reflected from lower portions of the display apparatus 200.

The aforementioned exemplary embodiments describe that the side of the reflector 220 facing away from the display panel unit 210 has the shape of a plurality of trapezoids. However, this is only one example, and the reflector 220, alternately, may have any of a variety of other shapes, as would be understood by one of skill in the art. For example, the side the reflector 220 facing away from the display panel unit 210 may be shaped as shown in either of FIGS. 10A and 10B. In these examples as well, the temperature indicating paint 225 may be applied to portions of the reflector 220 which face a direction from which external light is incident.

A user may turn on or off a light reflection function of the display apparatus using a separate menu or user interface (UI). For example, as illustrated in FIG. 11, if a user instruction for turning on the light reflection function is received by the inputter 280 while a UI for controlling the light reflection function is being displayed, the controller 290 can turn on the light reflection function, and cause the external light to be reflected, as illustrated in FIGS. 3A to 8B. Also, as illustrated in FIG. 11, if a user instruction to turn off the light reflection function is received by the inputter 280 while a UI for controlling the light reflection function is being displayed, the controller 290 can turn off the light refection function.

Hereinafter, a method for controlling a display apparatus will be explained more specifically with reference to FIG. 9. The display apparatus 200 according to this exemplary embodiment includes a display panel unit 210, a reflector 220 which is disposed on the display panel unit 210and a heat generator 230 which is disposed on the reflector 220. A color of the reflector changes according to a temperature thereof and enables the reflector to reflect light incident thereon from outside the display apparatus 200. The generator 230 generates heat to control the temperature of the reflector 220.

The display apparatus 200 senses an illumination of light incident thereon from outside the display apparatus 200 (S910). The display apparatus 200 may sense an illumination value of external light incident on only a partial region of the display apparatus 200, but this is merely exemplary. Alternately, an illumination value of a plurality of areas of the display apparatus 200 may be sensed.

The display apparatus 200 may generate heat to control a temperature of the reflector 220, to thereby control the reflector 220 to reflect light incident thereon from outside the display apparatus 200, based on the sensed illumination value (S920). More specifically, if the sensed illumination value is equal to or higher than a predetermined value, the display apparatus 200 may generate heat to change the color of temperature indicating paint disposed on the reflector 220 so that external light is reflected from a portion of the display apparatus 200 where the illumination value is higher.

Accordingly, a user may more easily view an image displayed on the display apparatus regardless of light from an external source.

An apparatus according to one or more of the exemplary embodiments may include a processor, a memory that stores and executes program data, a permanent storage such as a disk drive, a communication port that communicates with an external apparatus, and a user interface apparatus such as one or more of a touch panel, a key, and a button. Methods that may be implemented by a software module or an algorithm are codes or program commands that are executable on the processor and readable by a computer, and may be stored on a recording medium readable by a computer. A recording medium readable by a computer may include one or more of a magnetic storage medium (for example, a read-only memory, a random-access memory, a floppy disk, a hard disk, etc.) and an optical readable medium (for example, a compact disk read-only memory (CD-ROM), a digital versatile disk (DVD), etc.). A recording medium readable by a computer may be distributed among computer systems that are connected over a network so that a code readable by a computer may be stored and executed in a dispersed fashion. The medium may be readable by a computer, be stored in a memory, and be executed by a processor.

One or more exemplary embodiments may be represented by functional block components and diverse processing steps. Each of the functional blocks may be implemented by one or more pieces of hardware and/or software components that execute specific functions. For example, an exemplary embodiment may employ direct circuit components, such as a memory, processing, logic, and a look-up table, that execute diverse functions by control of one or more microprocessors or other control apparatuses. Components that are executed as software programming or software elements may be written in a programming or scripting language such as C, C++, Java, and using an assembler, including diverse algorithms that are implemented with data structure, processes, routines, or combination of other programming components. The functional factors may be implemented by an algorithm executed by one or more processors. In addition, exemplary embodiments may employ the related art for electronic configuration, signal processing, and/or data processing. The terms "mechanism", "element", "means", and "component" may be used in a broad sense, and is not limited to mechanical or physical components. The terms may include a set of routines of software that are connected with a processor.

The foregoing embodiments and advantages are merely exemplary and are not to be construed as limiting. For simplicity of the specification, electronic components, control systems, software, and other functional factors in the related art may be omitted. In addition, connection of lines or connection members between the components in the drawings illustrate functional connection and/or physical or circuital connection as example, and thus in a real apparatus, replaceable or additional diverse functional connection, physical connection or circuital connection may be provided.

In this specification and in the claims, the use of the term "the" and similar referential terms may refer to both the singular and the plural. In addition, when a range is written, individual values within the range are included (if there is no contrary mention). Accordingly, it is the same as the individual values that compose the range are written in the detailed description. Finally, the steps that compose the method may be performed in appropriate order if the order is not obviously written or if there is no contrary mention. The present invention is not always limited to the order in which the steps are written. The foregoing exemplary embodiments and advantages are merely exemplary and are not to be construed as limiting the present invention. Also, the description of exemplary embodiments herein is intended to be illustrative, and not to limit the scope of the claims, and many alternatives, modifications, and variations will be apparent to those skilled in the art.

## Claims

1. A display apparatus (100), comprising:
a display panel (110);
a reflector (120), disposed on the display panel (110), wherein a color of a first side of the reflector (120) is changeable based on a temperature thereof, and wherein the first side of the reflector (120) is configured to reflect light incident thereon from outside the display apparatus;
a heat radiator (130) disposed on the reflector (120);
a sensor (140); and
a controller (150) configured to:
control the sensor (140) to sense an illumination value of the light incident thereon from outside the display apparatus,
control the heat radiator (130) to generate heat according to the illumination value,
control a temperature of the first side of the reflector (120) based on the generated heat, and thereby change the color of the first side of the reflector according to the temperature.

2. The display apparatus as claimed in claim 1, wherein the reflector (120) comprises temperature indicating paint (225) disposed on the first side of the reflector (120), wherein a color of the temperature indicating paint (225) is changeable according to a temperature thereof.

3. The display apparatus as claimed in claim 2, wherein the first side of the reflector (120) faces a direction from which light is incident on the display apparatus from outside the display apparatus.

4. The display apparatus as claimed in claim 2, wherein, based on the illumination value sensed by the illumination sensing unit (140) being equal to or higher than a predetermined value, the controller (150) controls the heat radiator (130) to generate heat, thereby heating the temperature indicating paint (225) and changing a color thereof.

5. The display apparatus as claimed in claim 1, wherein the illumination sensing unit (140) comprises a plurality of illumination sensors (240-1, 240-2, 240-3) respectively disposed on a plurality of areas (210-1, 210-2, 210-3) of the display apparatus.

6. The display apparatus as claimed in claim 5, wherein the controller (150) controls the heat radiator (130) to generate heat selectively only in one of the plurality of areas (210-1, 210-2, 210-3) of the display apparatus in which an illumination value is equal to or higher than a predetermined value.

7. The display apparatus as claimed in claim 1, wherein the controller (150) controls the heat radiator (130) to generate heat selectively only in one of a plurality of areas (210-1, 210-2, 210-3) of the display apparatus according to an installation height of the display apparatus.

8. The display apparatus as claimed in claim 1, further comprising:
a distance sensing unit (250) configured to measure a distance between the display apparatus and a viewer,
wherein the controller (150) controls the heat radiator (130) to generate heat selectively only in one of a plurality of areas of the display apparatus according to the distance between the display apparatus and the viewer and the installation height of the display apparatus.

9. The display apparatus as claimed in claim 1, wherein the heat radiator (130) comprises at least one of transparent indium tin oxide (ITO) and a graphene heater film.

10. A method of controlling a display apparatus, the method comprising:
sensing (S910) an illumination value of light incident on the display apparatus from outside the display apparatus;
generating (S920) heat according to the illumination value; and
controlling a temperature of a reflector based on the generated heat and thereby changing a color of a first side of the reflector according to the temperature, and
wherein the first side of the reflector is oriented to reflect the light incident thereon from outside the display apparatus.

11. The method as claimed in claim 10, wherein the reflector comprises temperature indicating paint disposed on the at least first side of the reflector, wherein a color of the temperature indicating paint is changeable according to the temperature of the reflector.

12. The method as claimed in claim 11, wherein the first side of the reflector faces a direction from which light is incident on the display apparatus from outside the display apparatus.

13. The method as claimed in claim 10, further comprising:
identifying whether the illumination value is equal to or higher than a predetermined value, and
the generating heat comprises generating heat when the illumination value is equal to or higher than the predetermined value.

14. The method as claimed in claim 10, wherein the sensing the illumination value of light comprises a plurality of illumination sensors respectively sensing a plurality of illumination values of light incident on a plurality of areas of the display panel unit.

15. The method as claimed in claim 14, wherein the generating heat comprises generating heat selectively only in one of the plurality of areas of the display apparatus in which the illumination value is equal to or higher than a predetermined value.

## Patentansprüche

1. Anzeigevorrichtung (100), die Folgendes umfasst:
eine Anzeigetafel (110);
einen Reflektor (120), der auf der Anzeigetafel (110) angeordnet ist, wobei eine Farbe einer ersten Seite des Reflektors (120) auf der Basis ihrer Temperatur veränderlich ist und wobei die erste Seite des Reflektors (120) zum Reflektieren von Licht konfiguriert ist, das von außerhalb der Anzeigevorrichtung darauf einfällt;
einen Wärmestrahler (130), der auf dem Reflektor (120) angeordnet ist;
einen Sensor (140); und
eine Steuerung (150), konfiguriert zum:
Steuern des Sensors (140), um einen Beleuchtungswert des Lichts zu erfassen, das von außerhalb der Anzeigevorrichtung darauf einfällt,
Steuern des Wärmestrahlers (130), so dass er Wärme entsprechend dem Beleuchtungswert erzeugt,
Regeln einer Temperatur der ersten Seite des Reflektors (120) auf der Basis der erzeugten Wärme und dadurch Ändern der Farbe der ersten Seite des Reflektors entsprechend der Temperatur.

2. Anzeigevorrichtung nach Anspruch 1, wobei der Reflektor (120) temperaturanzeigenden Lack (225) auf der ersten Seite des Reflektors (120) aufweist, wobei eine Farbe des temperaturanzeigenden Lacks (225) entsprechend seiner Temperatur veränderlich ist.

3. Anzeigevorrichtung nach Anspruch 2, wobei die erste Seite des Reflektors (120) in eine Richtung zeigt, aus der Licht von außerhalb der Anzeigevorrichtung auf die Anzeigevorrichtung einfällt.

4. Anzeigevorrichtung nach Anspruch 2, wobei die Steuerung (150) auf der Basis, dass der von der Beleuchtungserfassungseinheit (140) erfasste Beleuchtungswert genauso hoch wie oder höher als ein vorbestimmter Wert ist, den Wärmestrahler (130) zum Erzeugen von Wärme steuert, wodurch der temperaturanzeigende Lack (225) erwärmt und seine Farbe geändert wird.

5. Anzeigevorrichtung nach Anspruch 1, wobei die Beleuchtungserfassungseinheit (140) mehrere Beleuchtungssensoren (240-1, 240-2, 240-3) umfasst, die jeweils auf mehreren Bereichen (210-1, 210-2, 210-3) der Anzeigevorrichtung angeordnet sind.

6. Anzeigevorrichtung nach Anspruch 5, wobei die Steuerung (150) den Wärmestrahler (130) zum Erzeugen von Wärme selektiv nur in einem der mehreren Bereiche (210-1, 210-2, 210-3) der Anzeigevorrichtung steuert, in dem ein Beleuchtungswert genauso hoch wie oder höher als ein vorbestimmter Wert ist.

7. Anzeigevorrichtung nach Anspruch 1, wobei die Steuerung (150) den Wärmestrahler (130) zum Erzeugen von Wärme selektiv nur in einem von mehreren Bereichen (210-1, 210-2, 210-3) der Anzeigevorrichtung entsprechend einer Installationshöhe der Anzeigevorrichtung steuert.

8. Anzeigevorrichtung nach Anspruch 1, die ferner Folgendes umfasst:
eine Abstandserfassungseinheit (250), die zum Messen eines Abstands zwischen der Anzeigevorrichtung und einem Betrachter konfiguriert ist,
wobei die Steuerung (150) den Wärmestrahler (130) zum Erzeugen von Wärme selektiv nur in einem von mehreren Bereichen der Anzeigevorrichtung entsprechend dem Abstand zwischen der Anzeigevorrichtung und dem Betrachter und der Installationshöhe der Anzeigevorrichtung steuert.

9. Anzeigevorrichtung nach Anspruch 1, bei der der Wärmestrahler (130) einen transparenten Indium-Zinn-Oxid-(ITO)-Film und/oder einen Graphen-Heizfilm umfasst.

10. Verfahren zum Steuern einer Anzeigevorrichtung, wobei das Verfahren Folgendes beinhaltet:
Erfassen (S910) eines Beleuchtungswertes von Licht, das von außerhalb der Anzeigevorrichtung auf die Anzeigevorrichtung einfällt;
Erzeugen (S920) von Wärme entsprechend dem Beleuchtungswert; und
Regeln einer Temperatur eines Reflektors auf der Basis der erzeugten Wärme und dadurch Ändern einer Farbe einer ersten Seite des Reflektors entsprechend der Temperatur, und
wobei die erste Seite des Reflektors so orientiert ist, dass sie das von außerhalb der Anzeigevorrichtung darauf einfallende Licht reflektiert.

11. Verfahren nach Anspruch 10, wobei der Reflektor einen temperaturanzeigenden Lack auf mindestens der ersten Seite des Reflektors aufweist, wobei eine Farbe des temperaturanzeigenden Lacks entsprechend der Temperatur des Reflektors veränderlich ist.

12. Verfahren nach Anspruch 11, wobei die erste Seite des Reflektors in eine Richtung zeigt, aus der Licht von außerhalb der Anzeigevorrichtung auf die Anzeigevorrichtung einfällt.

13. Verfahren nach Anspruch 10, das ferner Folgendes beinhaltet:
Identifizieren, ob der Beleuchtungswert genauso hoch wie oder höher als ein vorbestimmter Wert ist, und
die Erzeugung von Wärme beinhaltet die Erzeugung von Wärme, wenn der Beleuchtungswert genauso hoch wie oder höher als der vorbestimmte Wert ist.

14. Verfahren nach Anspruch 10, wobei das Erfassen des Beleuchtungswertes von Licht mehrere Beleuchtungssensoren umfasst, die jeweils mehrere Beleuchtungswerte von Licht erfassen, das auf mehrere Bereiche der Anzeigetafeleinheit einfällt.

15. Verfahren nach Anspruch 14, wobei die Erzeugung von Wärme die selektive Erzeugung von Wärme nur in einem der mehreren Bereiche der Anzeigevorrichtung umfasst, in dem der Beleuchtungswert genauso hoch wie oder höher als ein vorbestimmter Wert ist.

## Revendications

1. Appareil d'affichage (100), comprenant :
un panneau d'affichage (110) ;
un réflecteur (120), disposé sur le panneau d'affichage (110), dans lequel une couleur d'un premier côté du réflecteur (120) est modifiable en fonction d'une température de celui-ci, et dans lequel le premier côté du réflecteur (120) est configuré pour réfléchir la lumière incidente sur celui-ci depuis l'extérieur de l'appareil d'affichage ;
un radiateur de chaleur (130) disposé sur le réflecteur (120) ;
un capteur (140) ; et
un contrôleur (150) configuré pour :
commander le capteur (140) pour détecter une valeur d'éclairement de la lumière incidente sur celui-ci depuis l'extérieur de l'appareil d'affichage,
commander le radiateur de chaleur (130) pour générer de la chaleur en fonction de la valeur d'éclairement,
commander une température du premier côté du réflecteur (120) en fonction de la chaleur générée et modifier ainsi la couleur du premier côté du réflecteur en fonction de la température.

2. Appareil d'affichage selon la revendication 1, dans lequel le réflecteur (120) comprend de la peinture d'indication de température (225) disposée sur le premier côté du réflecteur (120), dans lequel une couleur de la peinture d'indication de température (225) est modifiable en fonction d'une température de celle-ci.

3. Appareil d'affichage selon la revendication 2, dans lequel le premier côté du réflecteur (120) fait face à une direction depuis laquelle de la lumière est incidente sur l'appareil d'affichage depuis l'extérieur de l'appareil d'affichage.

4. Appareil d'affichage selon la revendication 2, dans lequel, en fonction du fait que la valeur d'éclairement détectée par l'unité de détection d'éclairement (140) est égale ou supérieure à une valeur prédéterminée, le contrôleur (150) commande le radiateur de chaleur (130) pour générer de la chaleur, chauffant ainsi la peinture d'indication de température (225) et modifiant une couleur de celle-ci.

5. Appareil d'affichage selon la revendication 1, dans lequel l'unité de détection d'éclairement (140) comprend une pluralité de capteurs d'éclairement (240-1, 240-2, 240-3) respectivement disposés sur une pluralité de zones (210-1, 210-2, 210-3) de l'appareil d'affichage.

6. Appareil d'affichage selon la revendication 5, dans lequel le contrôleur (150) commande le radiateur de chaleur (130) pour générer de la chaleur sélectivement uniquement dans une zone de la pluralité de zones (210-1, 210-2, 210-3) de l'appareil d'affichage dans laquelle une valeur d'éclairement est égale ou supérieure à une valeur prédéterminée.

7. Appareil d'affichage selon la revendication 1, dans lequel le contrôleur (150) commande le radiateur de chaleur (130) pour générer de la chaleur sélectivement uniquement dans une zone d'une pluralité de zones (210-1, 210-2, 210-3) de l'appareil d'affichage en fonction d'une hauteur d'installation de l'appareil d'affichage.

8. Appareil d'affichage selon la revendication 1, comprenant en outre :
une unité de détection de distance (250) configurée pour mesurer une distance entre l'appareil d'affichage et un observateur,
dans lequel le contrôleur (150) commande le radiateur de chaleur (130) pour générer de la chaleur sélectivement uniquement dans une zone d'une pluralité de zones de l'appareil d'affichage en fonction de la distance entre l'appareil d'affichage et l'observateur et de la hauteur d'installation de l'appareil d'affichage.

9. Appareil d'affichage selon la revendication 1, dans lequel le radiateur de chaleur (130) comprend l'une au moins parmi une pellicule chauffante transparente en oxyde d'indium-étain (ITO) et une en graphène.

10. Procédé de commande d'un appareil d'affichage, le procédé comprenant :
la détection (S910) d'une valeur d'éclairement de la lumière incidente sur l'appareil d'affichage depuis l'extérieur de l'appareil d'affichage ;
la génération (S920) de chaleur en fonction de la valeur d'éclairement ; et
la commande d'une température d'un réflecteur en fonction de la chaleur générée et ainsi la modification d'une couleur d'un premier côté du réflecteur en fonction de la température, et
dans lequel le premier côté du réflecteur est orienté pour réfléchir la lumière incidente sur celui-ci depuis l'extérieur de l'appareil d'affichage.

11. Procédé selon la revendication 10, dans lequel le réflecteur comprend de la peinture d'indication de température disposée sur ledit au moins premier côté du réflecteur, dans lequel une couleur de la peinture d'indication de température est modifiable en fonction de la température du réflecteur.

12. Procédé selon la revendication 11, dans lequel le premier côté du réflecteur fait face à une direction depuis laquelle de la lumière est incidente sur l'appareil d'affichage depuis l'extérieur de l'appareil d'affichage.

13. Procédé selon la revendication 10, comprenant en outre :
l'identification si la valeur d'éclairement est égale ou supérieure à une valeur prédéterminée, et
la génération de chaleur comprend la génération de chaleur lorsque la valeur d'éclairement est égale ou supérieure à la valeur prédéterminée.

14. Procédé selon la revendication 10, dans lequel la détection de la valeur d'éclairement de lumière comprend une pluralité de capteurs d'éclairement qui détectent respectivement une pluralité de valeurs d'éclairement de la lumière incidente sur une pluralité de zones de l'unité panneau d'affichage.

15. Procédé selon la revendication 14, dans lequel la génération de chaleur comprend la génération de chaleur sélectivement uniquement dans une zone de la pluralité de zones de l'appareil d'affichage dans laquelle la valeur d'éclairement est égale ou supérieure à une valeur prédéterminée.
